# EUROPEAN PATENT APPLICATION

(11) **EP 4 825 688 A1**
(43) Date of publication of application: **21.10.2026**
(21) Application number: 25218822.2
(22) Date of filing: 26.11.2025
(51) Int. Cl.: B60W 30/18, B60W 60/00, B60W 50/14, G08G 1/16

(54) **VEHICLE AND METHOD FOR CONTROLLING THE SAME**

(30) Priority: 16.04.2025 KR 20250049397
(71) Applicant: Hyundai Motor Company, Seoul 06797 (KR); Kia Corporation, Seoul 06797 (KR)
(72) Inventor: LEE, Hwasoo, 18280 Hwaseong-si, Gyeonggi-do (KR); LEE, Byoung Joon, 18280 Hwaseong-si, Gyeonggi-do (KR)
(74) Representative: Hoffmann Eitle

(57) **Abstract**

An autonomous vehicle and a method for controlling same are disclosed. The autonomous vehicle according to an example of the present disclosure may include: a memory; and a processor electrically or adaptively connected to the memory, wherein the processor may be configured to: check a traffic volume in a target lane in which automatic lane change is scheduled and an occurrence time point of an Eyes On Request (EOR) of the autonomous vehicle, and determine the scheduled automatic lane change time point according to whether the traffic volume condition of the target lane and the EOR occurrence time point meet a preset condition.

## Description

### CROSS-REFERENCE TO RELATED APPLICATION

This application claims priority to Korean Patent Application No. 10-2025-0049397 , filed on April 16, 2025, the disclosure of which is incorporated herein by reference in its entirety.

### FIELD OF TECHNOLOGY

Various examples of the present disclosure relate to techniques for more efficiently operating automatic lane change.

### BACKGROUND

Generally, an automatic lane change of a vehicle is performed automatically when a preset distance or a specific time (TTLC: Time to Lane Change) is reached after a distance or a time from a surrounding vehicle is measured by using a vehicle surrounding sensor, a camera, or the like.

However, in a situation in which a traffic volume in a target lane is large or the relative speed with the adjacent vehicle is large, a situation in which it is difficult or impossible to change the lane while waiting until a preset time or distance is reached may occur.

In this case, there may be a problem in that the traffic volume and the state of surrounding vehicles might not be appropriately reflected, and thus the actual road conditions might not be satisfied.

### SUMMARY

The technical problem to be achieved by the present disclosure has been devised in order to solve the above-described problems, and an object of the present disclosure is to determine whether to adjust a time point of automatic lane change by determining a traffic volume in a target lane and a forward gaze state (EOR occurrence or non-occurrence) of a driver when the automatic lane change is scheduled.

The problems to be solved by the present disclosure might not be limited to the problems mentioned above, and other problems not mentioned will be clearly understood by a person skilled in the art from the following description.

An autonomous vehicle according to an example of the present disclosure may comprise: a memory; and a processor electrically or adaptively connected to the memory, wherein the processor may be configured to: check a traffic volume in a target lane in which automatic lane change is scheduled and an occurrence time point of an Eyes On Request (EOR) of the autonomous vehicle, and determine the scheduled automatic lane change time point according to whether the traffic volume condition of the target lane and the EOR occurrence time point meet a preset condition.

In the autonomous vehicle according to some examples of the present disclosure, the vehicle may be configured such that the automatic lane change by an autonomous driving system is limited for a preset time when an EOR occurs.

In the autonomous vehicle according to some examples of the present disclosure, the processor may be configured to: calculate a lane changeable time of the autonomous vehicle; compare the current driving speed of the autonomous vehicle with the speed of vehicles in the target lane; and determine whether the traffic volume condition of the target lane is satisfied based on the lane changeable time and speed comparison result.

In the autonomous vehicle according to some examples of the present disclosure, the processor may be configured to determine that the EOR occurrence time point meets a preset condition when a predetermined time has elapsed from a last EOR occurrence time point of the autonomous vehicle.

In the autonomous vehicle according to some examples of the present disclosure, the processor may be configured to: when the traffic volume condition of the target lane and the EOR occurrence time point meet a preset condition, attempt an automatic lane change at a time point earlier than the scheduled automatic lane change time point.

In the autonomous vehicle according to some examples of the present disclosure, the processor may be configured to output a first notification inducing forward gaze to a driver through an input/output interface of the vehicle when a predetermined time has not elapsed from the EOR occurrence time point.

In the autonomous vehicle according to some examples of the present disclosure, the processor may be configured to output a second notification distinct from the first notification through the input/output interface of the vehicle when the predetermined time has elapsed after outputting the first notification.

In the autonomous vehicle according to some examples of the present disclosure, the processor may be configured to re-determine the traffic volume in the target lane after a certain time when the average driving speed of the other vehicles in the target lane is higher than the current driving speed of the autonomous vehicle.

In the autonomous vehicle according to some examples of the present disclosure, the processor may be configured to preferentially ascertain that the traffic volume condition of the target lane has been met, and then perform a stepwise determination to determine whether the EOR occurrence time point condition has been met.

In the autonomous vehicle according to some examples of the present disclosure, the processor may be configured to maintain the existing scheduled automatic lane change time point when the traffic volume condition of the target lane is not met.

A method for controlling an autonomous vehicle according to an example of the present disclosure may comprise: checking a traffic volume in a target lane in which automatic lane change is scheduled; checking an occurrence time point of an Eyes On Request (EOR) of the autonomous vehicle; and determining the scheduled automatic lane change time point according to whether the traffic volume condition of the target lane and the EOR occurrence time point meet a preset condition.

In the method for controlling an autonomous vehicle according to some examples of the present disclosure, the vehicle may be configured such that the automatic lane change by an autonomous driving system is limited for a preset time when an EOR occurs.

In the method for controlling an autonomous vehicle according to some examples of the present disclosure, determining whether the traffic volume condition of the target lane is satisfied may comprise: calculating a lane changeable time of the autonomous vehicle; comparing the current driving speed of the autonomous vehicle with the speed of vehicles in the target lane; and determining whether the traffic volume condition of the target lane is satisfied based on the lane changeable time and speed comparison result.

In the method for controlling an autonomous vehicle according to some examples of the present disclosure, determining whether the EOR occurrence time point meets the preset condition may comprise: determining that the EOR occurrence time point meets a preset condition when a predetermined time has elapsed from a last EOR occurrence time point of the autonomous vehicle.

In the method for controlling an autonomous vehicle according to some examples of the present disclosure, determining whether the automatic lane change time point meets the preset condition may comprise: performing an automatic lane change at a time point earlier than the scheduled automatic lane change time point when the traffic volume condition of the target lane and the EOR occurrence time point meet a preset condition.

In the method for controlling an autonomous vehicle according to some examples of the present disclosure, the method may further comprise: outputting a first notification inducing forward gaze to a driver when a predetermined time has not elapsed from the EOR occurrence time point.

In the method for controlling an autonomous vehicle according to some examples of the present disclosure, the method may further comprise: outputting a second notification distinct from the first notification to a driver when the predetermined time has elapsed after outputting the first notification.

In the method for controlling an autonomous vehicle according to some examples of the present disclosure, the method may further comprise: re-determining the traffic volume in the target lane after a certain time when the average driving speed of the other vehicles in the target lane is higher than the current driving speed of the autonomous vehicle.

In the method for controlling an autonomous vehicle according to some examples of the present disclosure, the method may comprise: first determining whether the traffic volume condition of the target lane is met, and then determining whether the EOR occurrence time point condition is satisfied in a stepwise manner.

In the method for controlling an autonomous vehicle according to some examples of the present disclosure, the method may further comprise: maintaining the existing scheduled automatic lane change time point when the traffic volume condition of the target lane is not met.

According to an example of the present disclosure, a traffic volume condition of atarget lane and a driver's forward gaze state EOR are determined before performing the automatic lane change, so that the automatic lane change time of the vehicle may be adjusted more efficiently and safely.

For example, a computing may be device configured to manage an automatic lane change of an autonomous vehicle. The computing device may receive data indicating a traffic volume in a target lane in which the automatic lane change is scheduled. The traffic volume may indicate one or more locations of and one or more speeds of one or more vehicles in the target lane. The computing device may then calculate, based on an eye location of a driver inside the autonomous vehicle, a duration during which the driver had a forward gaze. The computing device may then cause, based on the traffic volume and the duration during which the driver had the forward gaze, the autonomous vehicle to execute the automatic lane change.

The effects of the present disclosure might not be limited to the effects mentioned above, and other effects not mentioned will be clearly understood by a person skilled in the art from the following description.

### BRIEF DESCRIPTION OF THE DRAWINGS

FIG. 1 is a configuration diagram of a vehicle.
FIG. 2 is a flowchart schematically illustrating a method of adjusting a time point of automatic lane change.
FIG. 3 is a flowchart illustrating a method of determining a traffic volume fulfillment condition.
FIG. 4 is a flowchart of determining whether to adjust a time point of automatic lane change by evaluating a forward gaze state EOR.
FIG. 5 is an exemplary diagram of content related to a method for adjusting a lane change.

### DETAILED DESCRIPTION

Hereinafter, various examples of the present disclosure will be described in detail with reference to the accompanying drawings.

However, the technical idea of the present disclosure is not limited to some examples to be described, but may be implemented in various different forms, and within the scope of the technical idea of the present disclosure, one or more of the constituent elements of the examples may be selectively combined or substituted for use.

Furthermore, the terminology used in the examples of the present disclosure (including technical and scientific terms), unless explicitly defined and described otherwise, may be interpreted as having a meaning that may be generally understood by one of ordinary skill in the art to which the present disclosure pertains, and generally used terms such as those defined in a dictionary may be interpreted in consideration of the contextual meaning in the relevant art.

Furthermore, the terminology used in the examples of the present disclosure is for describing the examples and is not intended to limit the present disclosure.

And, when a constituent element is described as being 'connected', 'coupled', or 'joined' to another constituent element, it may include not only a case where the constituent element is directly connected, coupled, or joined to the other constituent element, but also a case where it is 'connected', 'coupled', or 'joined' via another constituent element between the constituent element and the other constituent element.

Furthermore, when described as being formed or disposed "on (top of) or under (below)" each constituent element, "on (top of) or under (below)" includes not only a case where the two constituent elements are in direct contact with each other, but also a case where one or more other constituent elements are formed or disposed between the two constituent elements. In addition, when expressed as "on (top of) or under (below)", it may include the meaning of not only an upward direction but also a downward direction with respect to one constituent element.

In the various flowcharts of this document, at least some of each step may be omitted or the mutual order thereof may be changed, and at least some of the various examples of this document may be performed at a specific point in time of each step of the flowcharts. The operations of the various flowcharts of this document may be performed by at least one of the control device 100, the processor 130, or the autonomous vehicle 10. In addition, redundant content in the drawings of this document may be omitted.

'Autonomous driving system' or 'driver control assistance system' referred to in this document means hardware and software that may assist a driver in continuously controlling the longitudinal and lateral movements of a vehicle. Such a driver control assistance system may be referred to as a 'system' in this document.

'Feature' referred to in this document may mean a function of a specific system that provides assistance to a driver in a defined traffic scenario, situation, and system boundary.

'Dynamic Control' referred to in this document may mean performing operational and tactical functions required to move a vehicle in real time. This may include controlling the lateral and longitudinal movements of the vehicle, monitoring the road environment, responding to events in the road traffic environment, planning operations, and signaling.

'System Boundaries' referred to in this document may mean a verifiable or measurable limit or condition set by a manufacturer, to or within a condition that affects a system or a feature of the system designed to provide assistance to a driver and the ability of the system to operate as intended.

An "automatic lane change" referred to in this document is an operation in which the autonomous vehicle 10 moves the vehicle to a target lane planned in advance, and a lane change time point may be determined on a basis of a certain distance or time according to a driving route of the vehicle.

An "Eyes On Request (EOR)" referred to in this document means that the system requests the driver to keep an eye on the front, and when the driver is in a state of insufficient attention (e.g., Inattention to the front), the system may be configured to detect this and limit the autonomous driving function of the vehicle for a predetermined time.

**In** the present disclosure, each of phrases such as "A or B," "at least one of A and B," "at least one of A or B," "A, B or C," "at least one of A, B and C," may include any one or all possible combinations of the items listed together in the corresponding one of the phrases. For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random-access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., features of EOR timing or similar data, etc.) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., features of EOR timing or similar data, etc.) described herein.

One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., features of EOR timing or similar data, etc.) described herein.

Minimum risk maneuver (MRM) operation(s) may also be controlled, for example, based on one or more features (e.g., features of EOR timing or similar data, etc.) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., features of EOR timing or similar data, etc.) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., features of EOR timing or similar data, etc.) described herein. An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

An autonomous driving level and/or autonomous driving activation/deactivation may also be controlled, for example, based on one or more features (e.g., features of EOR timing or similar data) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as five second, 30 seconds, 1 minute, etc.). By changing the required user attentiveness, the driver may be required to look ahead more often (e.g., at least once in a threshold time period, such as five second, 30 seconds, 1 minute, etc.). By changing the autonomous driving level, one or more video contents might not be displayed on a display of the vehicle.

Hereinafter, examples will be described in detail with reference to the accompanying drawings, and the same or corresponding components will be denoted by the same reference numerals regardless of the reference numeral, and redundant description thereof will be omitted.

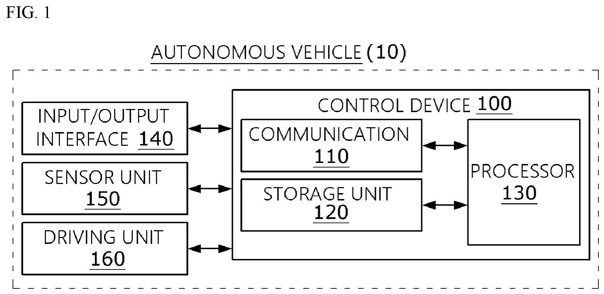

FIG. 1 is a configuration diagram of an autonomous vehicle 10 according to an example.

The autonomous vehicle 10 may include an autonomous driving control device 100, a communication unit 110, a storage unit 120, a processor 130, an input/output interface 140, a sensor unit 150, and a driving unit 160. Each of these configurations of FIG. 1 may be implemented within the interior of the vehicle.

The autonomous vehicle 10 may be dynamically controlled in various driving situations via an autonomous driving system. For example, the autonomous driving system may simultaneously provide driving stability and convenience through longitudinal control (acceleration and deceleration) and lateral control (lane maintenance and change) of the autonomous vehicle 10. Such an autonomous driving system may monitor the driving environment through a sensor and a control device, and process data in real time to adjust the position, driving speed, direction, and the like of the vehicle.

The autonomous driving control device 100 may be integrally formed with the internal components of the vehicle, and/or may be implemented as an independent device separate from other components inside the autonomous driving vehicle 10 to communicate with the internal components through various connection means (e.g., a CAN bus, a wireless network, a wired connection, etc.). The autonomous driving control device 100 may include a communication unit 110, a storage unit 120, and a processor 130 to manage longitudinal and lateral control of the vehicle, and may further include other components such as an input/output interface 140, a sensor unit 150, and a driving unit 160 to perform a complex control function according to a driving situation.

The autonomous driving control device 100 may store data collected by the sensor unit 150 during driving in the storage unit 120 and process the data in real time to control safety and convenience functions of the vehicle. For example, the control device may perform overall control and management of the autonomous driving system, such as providing a notification in a situation in which intervention of the driver may be required based on the data sensed from the sensor unit 150.

According to an example, the autonomous driving control device 100 may receive and analyze data for evaluating a traffic volume in a target lane and a driver's forward gaze state EOR from the rear sensor and the forward gaze sensor of the sensor unit 150. In addition, the autonomous driving control device 100 may perform a function of determining a scheduled automatic lane change time point and outputting a message for inducing steering control or focused attention to the driver.

In addition, the autonomous driving control device 100 may control a driving function by displaying a vehicle control state or receiving an input from a driver through a user interface linked with a human-machine interface (HMI) based on various driver settings and driving conditions.

The communication unit 110 may communicate with other control devices inside the vehicle to share data between systems, or transmit and receive various information through a connection with the outside of the vehicle. The communication unit 110 transmits control signals and data between internal components by using various in-vehicle communication schemes such as CAN communication and Ethernet, and may link driving information and external data in real time through communication with a user terminal, another vehicle (V2V), a vehicle-to-infrastructure (V2I), or an external server.

The communication unit 110 may perform short-range communication, GPS signal reception, Vehicle-to-Everything communication (V2X), optical communication, broadcast transmission/reception, and Intelligent Transport Systems (ITS) communication functions, and may support stable data transmission at a short distance by using wireless communication technologies such as Bluetooth, Radio Frequency Identification (RFID), Infrared Data Association (IrDA), Ultra Wideband (UWB), ZigBee, Near Field Communication (NFC), Wi-Fi, Wi-Fi Direct, and Wireless USB. In addition, the communication unit 110 may include a mobile communication module based on a mobile communication network (LTE, 5G, or the like) and a wireless Internet module for wireless Internet connection to receive real-time data through long-distance communication and improve the performance of the autonomous driving system by interworking with the cloud.

The storage unit 120 may include various types of memory capable of storing data, and may be integrated into the autonomous driving control device 100 or the processor 130 or may be configured in a separate module form. The storage unit 120 may include a non-volatile memory (e.g., a hard disk drive, a flash memory, an EEPROM, an SRAM, a FRAM, a PRAM, an MRAM, etc.) and a volatile memory (e. g., a DRAM, an SDRAM, a DDR-SDRAM, etc.), and may be combined to implement a memory system with various capacities and capabilities.

The storage unit 120 may store and manage various reference parameters used to determine the lane change time point, such as the traffic volume reference parameter P, the safety time parameter N, and the lane changeable time used in various examples of the present disclosure.

According to an example, the storage unit 120 may include a memory capable of storing and managing various data related to the autonomous driving system.

The processor 130 communicates with the communication unit 110, the storage unit 120, the input/output interface 140, the sensor unit 150, the driving unit 160, and various internal components of the autonomous vehicle 10 through an electrical or operational connection, and may control the operation of each component and perform data processing. The processor 130 may be a central processing unit for executing instructions and calculating data, and may collect, process, and analyze data in real time according to a driving environment of a vehicle to perform vehicle control.

The processor 130 may be implemented in hardware, software, or a combination thereof, and may perform vehicle control logic in the form of, for example, a microcontroller, an FPGA, an ASIC, or the like. It may also include multiple processor configurations for control of complex autonomous driving and driver assistance systems. Such a processor configuration may support comprehensive control and stable performance of the vehicle through the execution of autonomous driving and assistance systems, sensor data processing, communication data management, and driving-related decision functions.

According to an example, the processor 130 may perform an operation and determination function of determining, in a stepwise manner, a traffic volume condition and an EOR state of a target lane to determine whether to perform an automatic lane change early or to send a forward gaze concentration guidance message to a driver.

The input/output interface 140 receives an input related to vehicle control from a user, and serves to transmit a control state of the vehicle and system operation information to the user.

The input/output interface 140 may perform a function of receiving various inputs from a user and communicating a vehicle control state to the user. For example, the input/output interface 140 may include at least one of an input through a physical button provided inside the autonomous vehicle 10, an input through a soft button displayed on a display of the autonomous vehicles 10, a user's voice input, and a user's gesture input.

According to an example, the input/output interface 140 may pre-output an automatic lane change-related warning or notification message transmitted from the processor 130 to the driver to induce the driver to maintain the forward gaze state.

The input means may include a physical button, a soft key on the touch display, a voice recognition function, a gesture recognition function, and/or the like, through which the user may input a command such as an autonomous driving system activation request, a function changeover, or a driving assistance setting.

In addition, the input means may receive user input via an input device provided in the steering wheel of the autonomous vehicle 10. For example, the driver may input a command to activate or release the autonomous driving system even while driving through a button mounted on the steering wheel. These steering wheel-based inputs may support the user to quickly control an autonomous driving function through the provision of an intuitive interface.

The output means may include a display, an audio module (e.g., a speaker), a haptic module, and the like, and may provide a user with a state of the autonomous driving system, a control switching request notification, whether a function is activated, and the like in a visual, audible, and tactile form.

In addition, the state of the autonomous driving system may be intuitively checked through a head-up display (HUD), a cluster, an audio video navigation (AVN), and a display embedded in a rear mirror or a side mirror. In addition, it may be possible to check the state of the autonomous driving system through a display of a console installed in each column of the autonomous driving vehicle 10, an application of a user terminal, and the like.

The sensor unit 150 may include a plurality of sensors that sense various driving and environment information in real time to support stable operation of the autonomous driving system. The sensor unit 150 may measure a distance and a speed from a surrounding object through a long range detection sensor such as a Radio Detection and Ranging (RADAR) and a Light Detection and Ranging (LIDAR), and may detect an object near the autonomous vehicle 10 including an ultrasonic sensor.

In addition, the sensor unit 150 includes a position sensor such as a GPS to collect position information of the autonomous vehicle 10, and includes an optical sensor to provide ambient illuminance information, so that the system may respond to a change in light. In addition, the sensor unit 150 may include an accelerator pedal and a deceleration pedal sensor, a steering wheel sensing sensor, a seating sensor, and the like to monitor a driving control state and a user operation of the autonomous vehicle 10.

The sensor unit 150 may include a camera. The cameras may be classified into an external camera and an internal camera. The external camera may recognize the road and the surrounding environment, and the internal camera may detect the driver's condition (e.g., eye tracking, drowsiness detection) or indoor conditions to comprehensively grasp the conditions inside and outside the vehicle. The sensor unit 150 may include a heart rate sensor, a pressure sensor, an infrared sensor, or the like to collect biometric information or various environmental data of the driver.

The driving unit 160 may include various components that provide driving force necessary for driving the autonomous vehicle 10 and control operation of the vehicle according to a command output from the autonomous driving control device 100. The driving unit 160 may be configured with devices that generate and transmit power of the vehicle, such as an engine, a motor, a transmission, and a wheel drive system, and a controller that controls the same, and acceleration, deceleration, and redirection of the autonomous vehicle 10 may be performed through these configurations.

The driving unit 160 may be controlled to perform longitudinal control (acceleration and deceleration) and lateral control (lane maintenance and change) of the vehicle to maintain driving safety. For example, an instruction from the autonomous driving control device 100 may be received to adjust the output of the motor or adjust the rotational speed and direction of the wheel so that the vehicle may follow the driving path.

In addition, the drive unit 160 may include a brake system to reduce or stop the vehicle speed while driving. The driver 160 may control the autonomous vehicle 10 through an electric motor in the case of an electric vehicle, and based on an engine output in the case of the internal combustion engine vehicle.

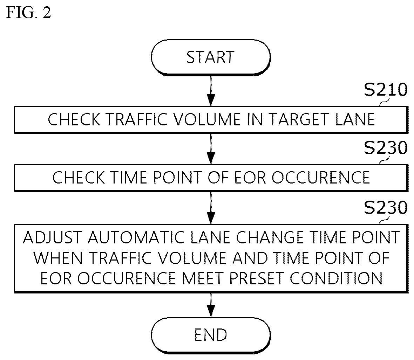

FIG. 2 is a flowchart schematically illustrating a method of adjusting a time point of automatic lane change according to an example of the present disclosure.

First, in step S210, the processor 130 may check a traffic volume in a target lane.

The processor 130 may receive data such as the presence or absence of the vehicle in the target lane, the relative speeds of the vehicles, and the like through the sensor unit 150, and/or check whether the traffic volume in the target lane meets a preset condition based on the data.

Then, in step S220, the processor 130 may check the time point of occurrence of the driver's forward gaze request (EOR). The processor 130 may check, based on an EOR time point last generated in the autonomous vehicle 10, whether it is in a state suitable for performing the automatic lane change.

In step S230, when both the traffic volume condition and the EOR occurrence time point condition of the target lane identified above meet the preset condition, the processor 130 may perform the automatic lane change at a time point earlier than the previously scheduled automatic lane change time point, or output a guidance message for inducing forward gaze concentration to the driver.

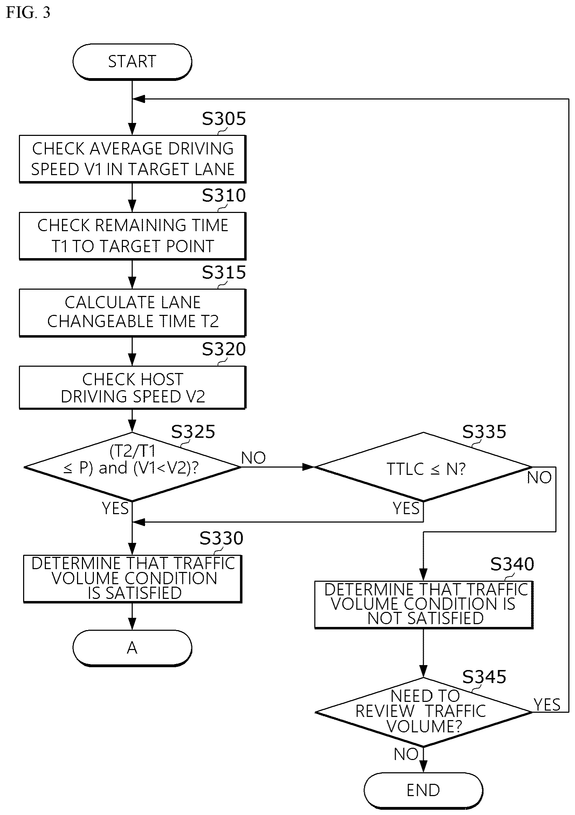

FIG. 3 is a flowchart illustrating a method of determining a traffic volume fulfillment condition according to an example of the present disclosure.

The processor 130 may check the current driving speed V2 of the autonomous vehicle 10 (S305).

The processor 130 may measure and receive the current speed of the vehicle in real time from a speed sensor of the sensor unit 150 mounted on the vehicle 10, thereby grasping the current driving speed of the autonomous vehicle 10.

Next, the processor 130 may check the average driving speed V1 in a target lane (S310).

The processor 130 may receive driving speed data of other vehicles existing in the target lane by using various sensors such as rear sensors incluing rear-side sensors, a camera, a radar, and a lidar provided in the sensor unit 150, and statistically process these data to calculate an average driving speed in the target lane.

For example, the processor 130 may determine the average driving speed V1 in the target lane by averaging the speeds of the neighboring vehicles in the target lane after sampling the speeds for a certain period of time.

The processor 130 may check the remaining time T1 to the target point (S315).

In detail, the processor 130 may calculate the distance between the current position of the vehicle 10 and the previously planned lane change target point through a position measurement sensor (such as a GPS sensor) inside the vehicle, and convert the distance into time using the current vehicle speed V2 previously checked in step S305 to calculate the remaining time T1. For example, when the speed V2 of the vehicle 10 is 100 km/h and the distance to the target point is 1 km, the processor 130 may calculate and ascertain that the remaining time is about 36 seconds.

Next, the processor 130 may calculate a time T2 at which the autonomous vehicle 10 may change lanes to the target lane (S320).

In detail, the processor 130 may receive data such as a distance, a relative speed, and a vehicle interval from surrounding vehicles drivng on the target lane from a rear sensor or the like of the sensor unit 150, and calculate a time interval at which the vehicle 10 may safely perform lane change based on this, to derive the lane changeable time T2.

For example, the processor 130 may calculate a safe interval in which the vehicle 10 may move to the target lane based on the distance and speed between the surrounding vehicles measured through the rear sensor.

The processor 130 may then determine whether the lane changeable time T2 of the autonomous vehicle 10 is less than or equal to the traffic volume reference parameter P compared to the remaining time T1, and the current driving speed V2 of the host vehicle is faster than the target lane average driving speed V1 (S325).

The above operation in step S325 may be used to determine whether the spare time T2 during which the actual lane change is possible is sufficiently secured compared to the remaining time T1 for the autonomous vehicle 10 to safely perform the lane change to the target lane.

When the lane changeable time T2 of the autonomous vehicle 10 is very short compared to the remaining time T1 to the target point, or when the average speed V1 in the target lane is slower than the host vehicle speed V2, it may be determined that a situation in which it is difficult to change the lane due to a large traffic volume or a small interval between vehicles in the target lane is a situation. In such a situation, it may be effective to advance the automatic lane change time point in advance or to induce the driver's concentration gaze.

The traffic volume reference parameter P is a reference value for determining whether it is possible to change the automatic lane of the autonomous vehicle 10, and may be set in the storage unit 120 in advance. The processor 130 may determine whether the lane changeable time T2 of the vehicle is sufficient compared to the remaining time T1 to the target point based on the traffic volume reference parameter P. The traffic volume reference parameter P may be dynamically set according to the speed of the vehicle 10, the traffic environment of the target lane, the driving characteristics of the vehicle, and the like.

When the current speed of the vehicle is higher than the average speed in the target lane and the lane changeable time T2 is sufficiently short compared to the remaining time T1 (S325: Yes), the processor 130 may determine that the traffic volume condition is satisfied (S330).

For example, when the lane changeable time is equal to or less than a certain percentage of the total remaining time and the speed in the target lane vehicle is slower than the speed of the host vehicle, the processor 130 may determine that the traffic volume condition is satisfied.

If any one of the conditions of S325 is not satisfied (S325: NO), the processor 130 may determine whether the time to lane change (TTLC), which is the remaining time until the lane change, is equal to or less than the preset safe time parameter N (S335).

In detail, the processor 130 may calculate the TTLC based on the current speed of the vehicle and the remaining distance to the target point, determine that it is necessary to immediately perform lane change when the TTLC reaches a threshold value equal to or less than the safe time parameter N, and consider that the traffic volume condition is satisfied and proceed to a subsequent step.

Step S335 is a step for determining that, even in a situation in which the traffic volume condition determined in the previous step S325 is not satisfied, when the time remaining until the target point of the vehicle approaches or has already reached the safety time parameter N that is the threshold time, the lane change may be immediately performed. That is, step S335 may serve as a type of final judgment condition for preventing a situation in which the vehicle deviates from the planned driving route or misses the target point even if the traffic volume condition is not satisfied.

According to an example, the safety time parameter N may be set differently according to a planned lane change point of the autonomous vehicle 10 or a driving environment condition.

The processor 130 may set the safety time parameter N stored in the storage unit 120 from a preset value (for example, 10 seconds or 15 seconds) based on the current speed of the vehicle, the traffic volume in the target lane, the complexity of the road environment (for example, an IC, a branch point, or the like), and the like.

For example, the processor 130 may set a larger value of the safety time parameter N in a complex traffic environment such as an IC branch point to prepare for lane change earlier, and set a relatively small value in a simple driving environment with low traffic volume to increase driving efficiency.

When the safety time parameter N is set in the above-described manner, the processor 130 may effectively determine a final time limit at which the lane change must be performed to ensure a safe driving environment.

When the TTLC is greater than the safe time parameter N, the processor 130 may determine that the traffic volume condition is not satisfied (S340).

Thereafter, the processor 130 may determine whether it is necessary to review the traffic volume after a certain period of time (S345), and when it is determined that it is necessary to review the traffic volume, it may perform iteratively from step S305 to periodically reassess the traffic volume condition.

For example, the processor 130 may determine that the traffic volume needs to be analyzed again when the speed of other vehicles driving in the target lane changes rapidly or when an environmental change such as the presence or absence of a newly entering vehicle is detected. In addition, even when the driving speed of the autonomous vehicle 10 is changed or the planned route is changed, the processor 130 may determine that a traffic volume review is necessary, and repeat the traffic volume condition determination process again from step S305.

Alternatively, the step may be terminated when review is unnecessary.

For example, when there are almost no other vehicles in the target lane, or when the scheduled lane change time of the vehicle 10 is long enough, the processor 130 may determine to perform the lane change at the predetermined time as originally planned without reviewing the traffic volume.

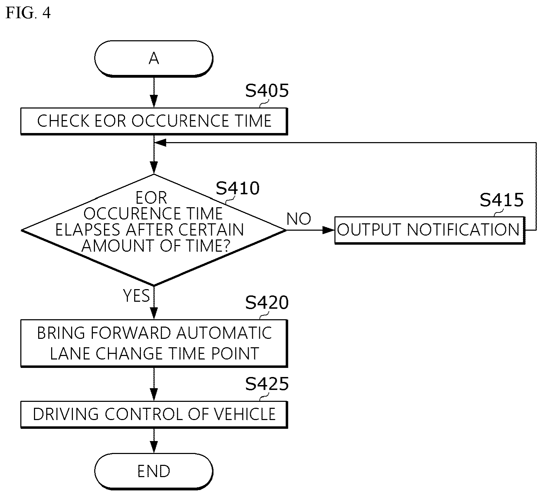

FIG. 4 is a flowchart of determining whether to adjust a time point of automatic lane change by evaluating a forward gaze state EOR according to an example of the present disclosure.

The processor 130 may check an Eyes On Request (EOR) occurrence time in step S405.

The processor 130 may check an occurrence time of the most recently occurred EOR. The processor 130 may receive and ascertain the most recent time point (EORT) at which the EOR is generated because the driver does not gaze forward from a forward gaze sensor of the sensor unit 150.

In step S410, the processor 130 may determine whether the time elapsed from the time when the recent EOR occurs (EORT) to the current time exceeds a preset predetermined time (for example, 7 seconds).

The processor 130 may determine that the restriction of the automatic lane change function is released when a predetermined time has exceeded since the recent EOR occurrence, so that the automatic lane change may be performed. Conversely, it may be seen that the automatic lane change function remains limited when a predetermined time is not exceeded.

As a result of the determination in step S410, when a predetermined time (e.g., 7 seconds) has not been exceeded since the recent EOR occurrence, the processor 130 may output a notification message for inducing forward gaze to the driver through the input/output interface 140 (S415).

For example, a guidance message "Look forward for automatic lane change" may be output on the display of the vehicle 10 to facilitate securing the driver's forward gaze state. Then, the processor 130 may return to step S405 to periodically reconfirm the forward gaze state of the driver and determine whether automatic lane change is possible.

As a result of the determination in step S410, if it is confirmed that the limitation of the automatic lane change function has been released because the predetermined time has sufficiently exceeded after the recent EOR occurrence, the processor 130 may adjust the automatic lane change time point to a time point earlier than the existing planned time point (S420).

The processor 130 may output an automatic lane change instruction in advance through a steering control device or the like included in the driving unit 160 of the vehicle 10 to control the vehicle to move to the target lane safely and quickly.

Additionally and/or alternatively, the processor 130 may further output a second notification indicating that the automatic lane change is released in the restricted state at a time point when a predetermined time (for example, 7 seconds) has elapsed after outputting a first notification inducing the driver to concentrate forward gaze through the input/output interface 140.

For example, when a predetermined time elapses after outputting the first notification, the processor 130 may further output a second notification including content such as "the automatic lane change function is now activated" or "the forward gaze condition is satisfied" to the driver through the input/output interface 140 to guide that the automatic lane change is possible.

In step S425, the processor 130 may perform driving control of the actual automatic lane change through the driving unit 160 of the vehicle 10. For example, the processor 130 may control the steering device of the vehicle 10 to allow the vehicle to safely enter the target lane, and perform additional control to maintain the speed and driving stability of the vehicle to support the vehicle to smoothly drive without leaving the planned route.

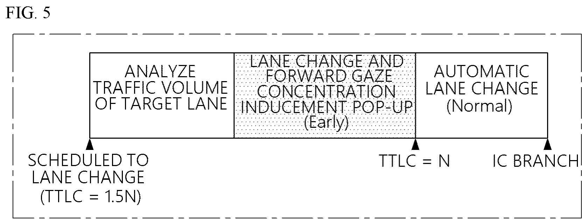

FIG. 5 is an exemplary diagram of content related to a method for adjusting a lane change time point of the present disclosure.

In this example, the autonomous vehicle 10 may perform a pre-planned automatic lane change at a specific location, such as an interchange (IC) branch.

The processor 130 may analyze the traffic volume condition of the target lane based on the surrounding vehicle data or the like input from the sensor unit 150 before the pre-planned automatic lane change scheduled time point. For example, the processor 130 may perform traffic volume analysis of the target lane from a time when the remaining time (TTLC) until the time when the autonomous vehicle 10 needs to perform lane change in the IC branch or the like is 1.5 times the preset safety time parameter N (e.g., TTLC=1.5N).

In this step, the processor 130 may calculate the current driving speed V2 of the autonomous vehicle 10, the average driving speed V1 in the target lane, the remaining time T1 until the target point, the lane changeable time T2 of the vehicle, and the like, and determine whether the traffic volume condition of the target lane is satisfied. At this time, when it is determined that the traffic volume condition is satisfied, the processor 130 may evaluate the EOR occurrence time point of the driver and the elapsed time therefrom to provide a notification for early performance of the automatic lane change or for inducing forward gaze concentration to the driver.

The processor 130 may determine whether a preset predetermined time (for example, 7 seconds) has been exceeded from the recent EOR occurrence when the traffic volume condition is satisfied, and when the predetermined time has been exceeded, perform the automatic lane change earlier than a planned time point (TTLC=N).

If the predetermined time is not exceeded, since the automatic lane change function is in a limited state, the processor 130 may output a notification (e.g., a pop-up message) for inducing the driver to concentrate forward gaze in advance through the input/output interface 140, so that the driver may secure a sufficient forward gaze state until the lane change time point (TTLC=N).

Through this step, the vehicle 10 may comprehensively evaluate the state of the vehicle and the driver from the step before the planned automatic lane change time point (TTLC=N) is reached, and flexibly adjust the automatic lane change time points suitable for ensuring the safety and driving stability of the vehicle according to the actual road environment.

When the processor 130 of the vehicle 10 fails to perform the lane change early, the normal automatic lane change function may be activated when the predetermined lane change time point (TTLC=N) is reached.

As shown in FIG. 5, the method may increase the success rate of the automatic lane change and provide a safe autonomous driving environment by comprehensively evaluating the traffic volume and the driver state of the target lane in advance before the automatic lane change is performed, and based on this, inducing early performance of the automatic lane change or improvement of the driver gaze state.

The term "-unit" used in this example means a software or hardware component such as an FPGA (field-programmable gate array) or an ASIC, and the "-unit" performs certain roles. However, the "-unit" is not limited in meaning to software or hardware. A "-unit" may be configured to be in an addressable storage medium and may be configured to be executed by one or more processors. Therefore, as an example, a "-unit" includes components such as software components, object-oriented software components, class components, and task components, and processes, functions, attributes, procedures, subroutines, segments of program code, drivers, firmware, microcode, circuitry, data, databases, data structures, tables, arrays, and variables. The functions provided in the components and "-units" may be combined into a smaller number of components and "-units" or may be further separated into additional components and "-units". Furthermore, the components and "-units" may also be implemented to be executed by one or more CPUs in a device or a secure multimedia card.

Although the preferred examples of the present disclosure have been described above, it will be understood by one skilled in the art to which the technology pertains that the present disclosure may be variously modified and changed within a scope that does not depart from the spirit and scope of the present disclosure described in the following claims.

## Claims

1. An autonomous vehicle, comprising:
a memory; and
a processor electrically connected to the memory,
wherein the processor is configured to:
check:
a traffic volume in a target lane in which an automatic lane change is scheduled, wherein the automatic lane change is associated with the autonomous vehicle, and
an occurrence time point of an Eyes On Request (EOR) of the autonomous vehicle;
determine a scheduled automatic lane change time point based on whether a condition of the traffic volume in the target lane and the occurrence time point of the EOR satisfy a preset condition; and
control, based on the determination of the scheduled automatic lane change time point, autonomous driving control of the autonomous vehicle.

2. The autonomous vehicle of claim 1, wherein the autonomous vehicle is configured such that the automatic lane change by an autonomous driving system of the autonomous vehicle is limited for a preset time when an EOR occurs.

3. The autonomous vehicle of claim 1 or 2, wherein the processor is configured to:
calculate a lane changeable time of the autonomous vehicle;
compare a current driving speed of the autonomous vehicle with speeds of vehicles in the target lane; and
determine whether the condition of the traffic volume in the target lane is satisfied based on the lane changeable time and the comparison.

4. The autonomous vehicle of any one of claims 1 to 3, wherein the processor is configured to:
determine that the occurrence time point of the EOR satisfies the preset condition when a predetermined time has elapsed from a last EOR occurrence time point of the autonomous vehicle, and/or.
based on the condition of the traffic volume in the target lane and the occurrence time point of the EOR satisfying the preset condition, cause the autonomous vehicle to attempt an automatic lane change at a time point earlier than the scheduled automatic lane change time point.

5. The autonomous vehicle of any one of claims 1 to 4, wherein the processor is configured to:
output a first notification inducing forward gaze to a driver, of the autonomous vehicle, through an input/output interface of the vehicle based on determining that a predetermined time has not elapsed from the occurrence time point of the EOR,
preferably wherein the processor is configured to:
output a second notification distinct from the first notification through the input/output interface of the vehicle based on determining that the predetermined time has elapsed after outputting the first notification.

6. The autonomous vehicle of any one of claims 1 to 5, wherein the processor is configured to:
re-determine the traffic volume in the target lane after a certain time based on determining that an average driving speed of other vehicles in the target lane is higher than a current driving speed of the autonomous vehicle.

7. The autonomous vehicle of any one of claims 1 to 6, wherein the processor is configured to:
preferentially ascertain that the condition of the traffic volume in the target lane has been satisfied, and
based on the condition of the traffic volume in the target lane being satisfied, determine whether the condition of the occurrence time point of the EOR has been satisfied, and/or
wherein the processor is configured to:
maintain an existing scheduled automatic lane change time point when the condition of the traffic volume in the target lane is not satisfied.

8. A method performed by an autonomous vehicle, the method comprising:
checking a traffic volume in a target lane in which an automatic lane change is scheduled, wherein the automatic lane change is associated with the autonomous vehicle;
checking an occurrence time point of an Eyes On Request (EOR) of the autonomous vehicle;
determining a scheduled automatic lane change time point based on whether a condition of the traffic volume in the target lane and the occurrence time point of the EOR satisfy a preset condition; and
controlling, based on the determining of the scheduled automatic lane change time point, autonomous driving control of the autonomous vehicle.

9. The method of claim 8, wherein the autonomous vehicle is configured such that the automatic lane change by an autonomous driving system of the autonomous vehicle is limited for a preset time when an EOR occurs.

10. The method of claim 8 or 9, wherein determining whether the condition of the traffic volume in the target lane is satisfied comprises:
calculating a lane changeable time of the autonomous vehicle;
comparing a current driving speed of the autonomous vehicle with speeds of vehicles in the target lane; and
determining whether the condition of the traffic volume in the target lane is satisfied based on the lane changeable time and the comparison, and/or
wherein determining whether the occurrence time point of the EOR satisfaies the preset condition comprises:
determining that the occurrence time point of the EOR satisfies the preset condition when a predetermined time has elapsed from a last EOR occurrence time point of the autonomous vehicle.

11. The method of any one of claims 8 to 10, further comprising:
performing an automatic lane change at a time point earlier than the scheduled automatic lane change time point based on the condition of the traffic volume in the target lane and the occurrence time point of the EOR satisfying the preset condition.

12. The method of any one of claims 8 to 11, further comprising:
outputting a first notification inducing forward gaze to a driver, of the autonomous vehicle, based on determining that a predetermined time has not elapsed from the occurrence time point of the EOR, preferably further comprising:
outputting a second notification distinct from the first notification to the driver based on determining that the predetermined time has elapsed after outputting the first notification.

13. The method of any one of claims 8 to 12, further comprising:
re-determining the traffic volume in the target lane after a certain time based on determining that an average driving speed of other vehicles in the target lane is higher than a current driving speed of the autonomous vehicle.

14. The method of any one of claims 8 to 13, comprising:
determining whether the condition of the traffic volume in the target lane is satisfied, and
based on the condition of the traffic volume in the target lane being satisfied, determining whether the condition of the occurrence time point of the EOR is satisfied.

15. A computing device of an autonomous vehicle, the computing device comprising:
one or more processors; and
memory storing instructions that, when executed by the one or more processors, cause the autonomous vehicle to:
receive data indicating a traffic volume in a target lane in which an automatic lane change of the autonomous vehicle is scheduled, wherein the traffic volume indicates one or more locations of and one or more speeds of one or more vehicles in the target lane;
calculate, based on tracking an eye of a driver inside the autonomous vehicle, a duration during which the driver had a forward gaze; and
cause, based on the traffic volume and the duration during which the driver had the forward gaze, the autonomous vehicle to execute the automatic lane change.
